# EUROPÄISCHE PATENTSCHRIFT

(11) **EP 2 962 205 B1**
(45) Veröffentlichungstag und Bekanntmachung des Hinweises auf die Patenterteilung: **20.06.2018**
(21) Anmeldenummer: 13717466.0
(22) Anmeldetag: 09.04.2013
(51) Int. Cl.: G06F 11/36, G06F 11/22, G06F 11/263

(54) **MEHRKERN-PROZESSORSYSTEM MIT FEHLERANALYSEFUNKTION**
MULTI-CORE PROCESSOR SYSTEM HAVING AN ERROR ANALYSIS FUNCTION
SYSTÈME DE PROCESSEUR MULTI-COEUR POURVU D'UNE FONCTION D'ANALYSE D'ERREUR

(43) Veröffentlichungstag der Anmeldung: 06.01.2016
(73) Patentinhaber: Siemens Aktiengesellschaft, 80333 München (DE)
(72) Erfinder: GRAF, Rene, 90513 Zirndorf (DE)
(86) Internationale Anmeldenummer: PCT/EP2013/057382
(87) Internationale Veröffentlichungsnummer: WO 2014/166526

(56) Entgegenhaltungen:
- US-A1- 2006 282 707
- US-A1- 2007 180 322
- US-A1- 2008 115 113

## Beschreibung

Die Erfindung betrifft ein Verfahren zum Betreiben eines Mehrkern-Prozessorsystems, durch welches unterschiedliche Threads (Programmteile oder Programmfäden) eines Programms zeitgleich durch mehrere Prozessorkerne des Mehrkern-Prozessorsystems ausgeführt werden, wobei jeder Prozessorkern einen anderen der Threads ausführt. Zu der Erfindung gehört auch ein Mehrkern-Prozessorsystem mit einer Debugging-Einrichtung für eine Programmanalyse des Programms. Schließlich gehört zu der Erfindung noch ein Computerprogrammprodukt, mittels welchem ein herkömmliches Mehrkern-Prozessorsystem im Sinne des erfindungsgemäßen Verfahrens ertüchtigt werden kann.

Ein Computer kann für die Bereitstellung des sogenannten "echten" Multitaskings mehrere Prozessoren oder auch einen Prozessor mit mehr als einem Prozessorkern umfassen. Eine solche Anordnung aus mehreren Prozessoren und/oder mehreren Prozessorkernen innerhalb eines Prozessors wird hier als Mehrkern-Prozessorsystem bezeichnet. Durch ein solches Mehrkern-Prozessorsystem werden einzelne, unabhängig voneinander ausführbare Programmteile (Threads) echtparallel ausgeführt, das heißt zeitgleich. Programme, die intern aus mehreren Threads bestehen, können auf nahezu beliebig vielen solcher Prozessorkerne verteilt werden, sodass immer mehr als nur ein Thread aktiv ist.

Viele solcher Programme, die so aufgebaut sind, sind aber bisher oft nur auf sogenannten Einkern-Prozessorsystemen ausgeführt worden. Durch ein Einkern-Prozessorsystem kann nur ein Pseudo-Multitasking bereitgestellt werden. Hierbei werden die einzelnen Threads eines Programms im schnellen Wechsel nacheinander ausgeführt, so dass keine echte zeitliche Parallelität vorliegt. Wird ein solches Programm nun auf einem Mehrkern-Prozessorsystem ausgeführt, so kann dies zu völlig neuen Fehlerbildern führen, wenn das Programm nicht an allen Stellen für ein Mehrkern-Prozessorsystem korrekt strukturiert ist.

Die Fehlersuche nennt man Debugging (Fehler = Bug). Der Aufbau eines Debuggers besteht in der Regel aus zwei Teilen: dem Frontend, das dem Programmierer verschiedene Möglichkeiten zur Steuerung der Fehleranalyse bietet, und dem Backend, das sich dann um die Ausführung dieser Steuerkommandos kümmert, während das Frontend unbeeinflusst weiterläuft. Diese beiden Einheiten (Frontend und Backend) sind selbst Programme und können auch auf anderen Computern als dem Mehrkern-Prozessorsystem laufen, was speziell im Bereich von Embedded-Systemen verbreitet ist.

Eine zusätzliche, mögliche Realisierungsform einer Backend-Einheit sind sogenannte Debug-Probes. Diese Hardware-Schaltung bearbeitet Debug-Befehle oder Debug-Anweisungen des Frontends und gibt sie über spezielle Hardware-Debug-Schnittstellen an das Mehrkern-Prozessorsystem weiter. Ein Beispiel für ein solches Debugging-System ergibt sich aus dem JTAG-Standard (Joint Test Action Group, IEEE-Standard 1149.1). Bei Mehrkern-Prozessorsystemen lassen sich hierbei die Prozessorkerne einzelne ansprechen.

Ein Debugging bietet im Allgemeinen zwei wesentliche Mechanismen, die ein laufendes Programm anhalten, also die Ausführung des Programms auf einem Prozessorkern unterbrechen. Entweder wird es von außen angehalten (Stop) oder zuvor im Programmcode des Programms wurde eine Unterbrechungsstelle (Breakpoint) gesetzt, der das Programm stoppt, wenn der Programmzähler des betreffenden Prozessorkerns diesen Punkt erreicht, unabhängig davon, in welchem Thread sich das Programm gerade befindet. Anschließend gibt es im Wesentlichen auch zwei Möglichkeiten, wie das Programm fortgesetzt wird. Entweder wird nur ein einzelner Befehl im aktuellen Thread ausgeführt (Single Step) und der Prozessor dann wieder unterbrochen oder das Programm wird im Ganzen fortgesetzt (Continue-Befehl), was auch wieder zu Thread-Wechseln führen kann.

Bei Einzelkern-Prozessorsystemen hält bei beiden Unterbrechungsmöglichkeiten der gesamte Prozessor an, d.h. das Programm an sich wird nicht weiter ausgeführt, so dass sichergestellt ist, dass alle Threads und damit alle Daten des Programms, die den aktuellen Programmzustand beschreiben, sich exakt in dem Zustand befinden, der beim Anhalten des einen Threads vorliegt. Beim Weiterlaufen per Single-Step-Befehl ändern sich ebenfalls nur diejenigen Programmdaten, die der aktuelle Thread durch den einen Programmschritt verändert.

Dies alles trifft bei Mehrkern-Prozessorsystemen nicht mehr zu, so dass sich einige Probleme ergeben, um das Programm in einem konsistenten Zustand anzuhalten und aus den Programmdaten verlässliche Rückschlüsse auf mögliche Fehlerursachen ziehen zu können. Verteilen sich nämlich die Threads des Programms auf mehrere Prozessorkerne und wird dann die Ausführung eines Threads unterbrochen, weil der Thread auf einem Breakpoint läuft, hält zunächst auch nur dieser eine Prozessorkern an, während alle anderen Prozessorkerne und somit auch die anderen Threads des Programms weiterlaufen, d.h. durch die übrigen Prozessorkerne weiter ausgeführt werden. Um das Weiterlaufen zu verhindern, muss ein Debugger nach Erkennen einer Programmunterbrechung in einem Prozessorkern auch die übrigen Prozessorkerne anhalten. Hierzu nutzt man den folgenden Mechanismus. Läuft ein Thread auf einem Breakpoint, so wird in dem betroffenen Prozessorkern eine Ausnahmebehandlung ausgelöst, d.h. es wird eine sogenannte Exception-Handling-Routine durch den betroffenen Prozessorkern abgearbeitet. Durch diese Routine wird das Ereignis an das Backend des Debuggers gemeldet, welches wiederum das Ereignis an das Frontend weitergibt. Das Frontend hat die entsprechenden Informationen über die Threads und die Prozessorkerne, so dass es die Prozessorkerne, auf denen die übrigen Threads des gleichen Programms ablaufen, ebenfalls über ein Kommando an das Backend anhalten kann.

Dieser Vorgang dauert aber in der Größenordnung von Millisekunden, was dazu führen kann, dass das zu analysierende Programm in manchen Threads schon sehr viel weiter ist, als es zum Zeitpunkts des Unterbrechens am Breakpoint in dem einen Thread war. Ebenso können ganz andere Threads inzwischen aktiv sein und sich Threads sogar beendet haben. Dies gilt insbesondere, da moderne Prozessoren Taktfrequenzen im Gigahertz-Bereich haben, so dass pro Millisekunde ca. 1 Million Befehle ausgeführt werden. Daher kann über diesen Weg keine konsistente Angabe der Programmdaten in dem Programm beim Erreichen eines Breakpoints hergestellt werden. Des Weiteren ist auch ungeklärt, was bei einem Single-Step-Befehl in einem Mehrkern-Prozessorsystem eigentlich passieren soll. Läuft nur der eine Thread, der die Unterbrechung verursacht hat, einen Programmschritt weiter oder sollen alle Threads, die gerade auf den anderen Prozessorkernen aktiv sind, ebenfalls um einen Programmschritt weiter ausgeführt werden?

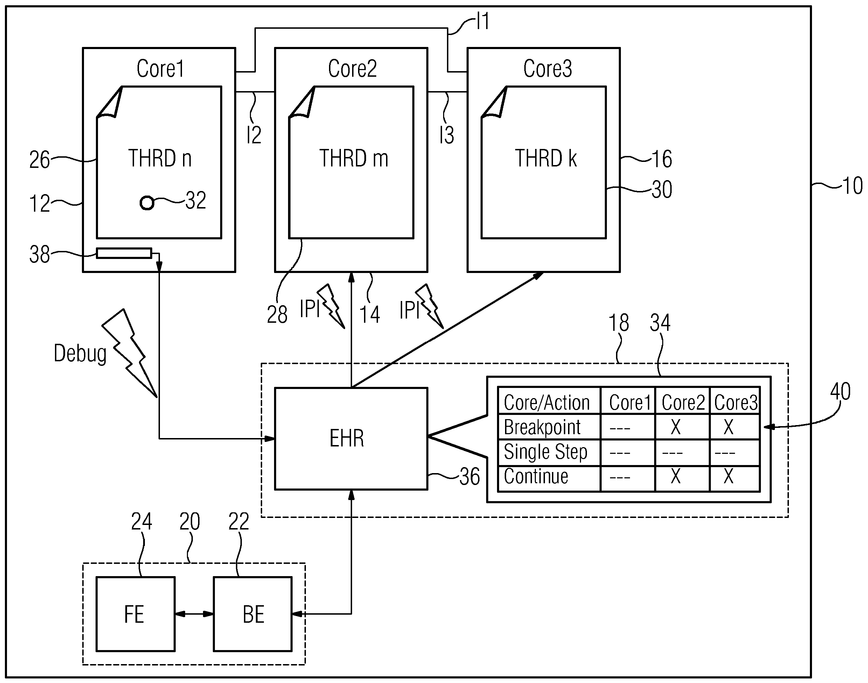

Die Druckschrift US 2007/180322 A1 beschreibt ein Verfahren gemäß der Preambel des Patentanspruchs 1. Die FIGUR zeigt hierzu ein entsprechendes Mehrkern-Prozessorsystem.

Der Erfindung liegt die Aufgabe zugrunde, bei einem Mehrkern-Prozessorsystem eine genauere Fehleranalyse (Debugging) für ein Programm mit mehreren Threads bereitzustellen.

Die Aufgabe wird durch ein Verfahren gemäß Patentanspruch 1, ein Mehrkern-Prozessorsystem gemäß Patentanspruch 9 sowie ein Computerprogrammprodukt gemäß Patentanspruch 10 gelöst. Vorteilhafte Weiterbildungen der Erfindung sind durch die Unteransprüche gegeben.

Das erfindungsgemäße Verfahren geht von der eingangs beschriebenen Situation aus, dass unterschiedliche Threads des zu analysierenden Programms zeitgleich durch jeweils einen anderen Prozessorkern des Mehrkern-Prozessorsystems ausgeführt werden. Bei dem Verfahren wird nun in an sich bekannter Weise in einen ersten der Threads, der von einem ersten der Prozessorkerne ausgeführt wird, ein Breakpoint eingeführt. Diese Steuermöglichkeit zum gezielten Unterbrechen eines Threads ist im Folgenden zusammenfassend als Debug-Anweisung bezeichnet. Durch eine solche Debug-Anweisung wird also bei Ausführen der Debug-Anweisung durch den ersten Prozessorkern dieser dazu gebracht, das Ausführen des ersten Threads zu unterbrechen. Gemäß heutigem Hardware-Standard führt ein Prozessorkern bei Erreichen einer Debug-Anweisung anstelle des Threads dann eine Exception-Handling-Routine aus.

Bei dem erfindungsgemäßen Verfahren wird nun (bevorzugt vor dem Start des Programms) eine Zuordnungsliste oder Zuordnungsmatrix bereitgestellt, welche festlegt, welcher andere Prozessorkern zusätzlich unterbrochen werden soll, wenn der erste Prozessorkern unterbrochen wird, d.h. wenn der erste Prozessorkern gemäß der Debug-Anweisung das Ausführen des ersten Threads unterbricht. Des Weiteren ist die genannte Exception-Handling-Routine des ersten Prozessors dazu ausgelegt, anhand dieser Zuordnungsmatrix mindestens einen zusätzlich zu unterbrechenden Prozessorkern zu ermitteln. Mit anderen Worten wird die Entscheidung darüber, welche anderen Prozessorkerne noch anzuhalten sind, nicht, wie im Stand der Technik, durch Informieren des Backends und weiter durch Informieren des Frontends ermittelt, sondern unmittelbar durch die Exception-Handling-Routine, und zwar anhand der Zuordnungsmatrix. Um dabei in einem Mehrkern-Prozessorsystem auch eine schnellere Reaktion der ermittelten übrigen Prozessorkerne zu erhalten, sieht das erfindungsgemäße Verfahren des Weiteren vor, an diesen zumindest einen ermittelten Prozessorkern einen Inter-Prozessor-Interrupt (IPI) zum Unterbrechen dieses Prozessorkerns zu senden. Ein solches IPI-Signal wird direkt über Leitungen, die insbesondere zwischen den Prozessorkernen verlaufen, an die anderen Prozessorkerne übertragen. Das IPI-Signal kann durch die Exception-Handling-Routine des ersten Prozessorkerns ausgelöst werden. Dieser Vorgang dauert nur wenige Nanosekunden, so dass die Threads auf den anderen Prozessorkernen nur sehr wenige Befehle weitergelaufen sind und die Programmdaten so konsistent wie möglich sind.

Indem das erfindungsgemäße Verfahren hardwarebasiert die vorhandenen Mechanismen des Exception-Handlings einerseits und des Inter-Prozessor-Interrupts andererseits kombiniert, ergibt sich ein neuartiges flexibles Debug-System, das in einem Mehrkern-Prozessorsystem für Datenkonsistenz sorgt, ohne dass hierzu das zu analysierende (zu debuggende) Programm näher gekannt werden muss. Das erfindungsgemäße Verfahren weist somit den Vorteil auf, dass zwischen dem Erreichen einer Debug-Anweisung in einem Thread auf einem ersten Prozessorkern und dem Anhalten der übrigen Prozessorkerne nur wenige Nanosekunden (höchstens eine Mikrosekunde) vergehen, während durch eine Unterbrechung, die durch das Backend oder sogar Frontend gesteuert wird, mehr als eine Millisekunde oder sogar bis zu einer Sekunde Zeit vergeht. Somit sind durch das erfindungsgemäße Verfahren nicht nur der erste Thread, sondern auch die übrigen Threads in nahezu dem Zustand, wie sie ihn aufwiesen, als die Debug-Anweisung im ersten Thread ausgeführt wurde. Ein weiterer Vorteil ergibt sich, dass durch die Zuordnungsmatrix gezielt ausgewählt werden kann, welche übrigen Prozessorkerne angehalten werden. Es ist hier nicht nötig, alle zu dem Programm gehörigen Threads anzuhalten.

Erst nach dem Anhalten aller ausgewählten Prozessorkerne, d.h. nach dem Unterbrechen der jeweiligen auf den Prozessorkernen ausgeführten Threads, werden dann bevorzugt das Backend und in dessen Folge das Frontend über das Anhalten des Programms informiert. Hierzu wird gemäß einer Ausführungsform des Verfahrens ein die Unterbrechung signalisierendes Signal an das Backend und/oder das Frontend des Debuggers abgegeben. Durch diese Weiterbildung ergibt sich der Vorteil, dass das Frontend in derselben Weise ausgestaltet sein kann wie ein herkömmliches Frontend, außer dass nun für das Frontend konsistentere Programmdaten vorliegen.

Bevorzugt wird durch die Zuordnungsmatrix nicht nur für einen, sondern für mehrere der Prozessorkerne festgelegt, welche andere Prozessorkerne jeweils bei Erreichen einer Debug-Anweisung angehalten werden sollen. Hierbei muss nicht einmal festgelegt sein, dass diese anderen Prozessorkerne ebenfalls angehalten werden sollen. Es kann hier auch eine andere Reaktion festgelegt werden. Läuft also irgendein Prozessorkern auf einem Breakpoint, so steht in der Zuordnungsmatrix, welche anderen Prozessorkerne in diesem Fall ebenfalls angehalten werden sollen oder in sonstiger Weise informiert werden sollen. Die Zuordnungsmatrix muss dabei auch nicht symmetrisch sein, so dass z.B. zwar Prozessorkern N anhält, wenn Prozessorkern M auf einem Breakpoint läuft, aber nicht umgekehrt. Hierdurch ergibt sich der Vorteil, dass durch Bilden einer geeigneten Zuordnungsmatrix gezielt Fehler lokalisiert werden können, indem beispielsweise einmal ein Thread von einem anderen Thread unterbrochen wird und ein anderes Mal nicht. Auch kann im Zusammenhang mit einem Single-Step-Befehl durch die Zuordnungsmatrix festgelegt werden, ob ein bestimmter anderer Prozessorkern ebenfalls einen einzelnen Programmschritt parallel ausführen soll oder nicht. Auch dabei kann die Zuordnungsmatrix asymmetrisch sein, um sicherzustellen, dass die Daten inhaltlich und zeitlich konsistent bleiben.

Die Zuordnungsmatrix kann auch dazu genutzt werden festzulegen, was passieren soll, wenn nach dem Unterbrechen des ersten Prozessorkerns und des zumindest einen zusätzlich ermittelten Prozessorkerns ein Debugger ein Continue-Signal erzeugt. Gemäß einer Ausführungsform des Verfahrens wird hier durch den Debugger oder durch einen der unterbrochenen Prozessorkerne anhand der Zuordnungsmatrix ermittelt, an welche der Prozessorkerne das Continue-Signal weitergeleitet werden soll. Gemäß der Zuordnungsmatrix wird also dann das Continue-Signal nicht nur an einen, sondern an mehrere der unterbrochenen Prozessorkerne geleitet. Hierdurch ergibt sich der Vorteil, dass die unterbrochenen Prozessorkerne auch wieder synchron die Abarbeitung ihres jeweiligen Threads beginnen.

Gemäß einer Ausführungsform des Verfahrens wird entsprechen durch den Debugger oder durch einen der unterbrochenen Prozessorkerne anhand der Zuordnungsmatrix ermittelt, an welche der Prozessorkerne ein Single-Step-Befehl weitergeleitet werden soll, der nach dem Unterbrechen des ersten Prozessorkerns und des zumindest einen zusätzlich ermittelten Prozessorkerns durch einen Debugger erzeugt worden ist. Gemäß der Zuordnungsmatrix wird also dann der Single-Step-Befehl nicht nur an einen, sondern an mehrere der unterbrochenen Prozessorkerne geleitet. Hierdurch ergibt sich der Vorteil, dass die unterbrochenen Prozessorkerne auch wieder synchron die Abarbeitung ihres jeweiligen Threads um einen Befehl weiter durchführen.

Die Zuordnungsmatrix kann beispielsweise im Backend-Programm definiert und beispielsweise von einem Benutzer im Frontend konfiguriert werden. So kann ein Benutzer festlegen, wie diese Zuordnungsmatrix individuell beschreibt, welche Prozessorkerne auf Aktionen eines anderen wie reagieren sollen.

Hierbei muss darauf geachtet werden, dass gemäß dem Verfahren zunächst einmal nur festgelegt wird, welcher andere Prozessorkern angehalten werden soll. Oft ist man aber nicht an einem bestimmten Prozessorkern, sondern an einem bestimmten Thread interessiert, der ebenfalls angehalten werden soll, wenn ein bestimmter anderer Thread durch einen Debug-Anweisung unterbrochen wird. Es muss also sichergestellt sein, dass der richtige Thread auf dem unterbrochenen Prozessorkern ausgeführt wird. Hierzu wird gemäß einer Ausführung des Verfahrens durch eine Konfigurationseinrichtung, also beispielsweise den Debugger (manuell im Frontend oder automatisch im Backend), vor dem Start des Programms ermittelt, welche Threads in Bezug auf das Unterbrechen voneinander abhängig sein sollen, und festgelegt, welcher der Threads durch welchen der Prozessorkerne ausgeführt werden soll. Die Zuordnungsmatrix wird dann entsprechend der ermittelten Abhängigkeit erzeugt und die Threads zu den richtigen Prozessorkernen zugeordnet. Das Zuordnen von Threads zu bestimmten Prozessorkernen ist an sich aus dem Stand der Technik bekannt.

Die Zuordnungsmatrix kann gemäß einer Weiterbildung des Verfahren aber auch jederzeit durch einen Debugger, insbesondere ein Frontend eines Debuggers, oder eine andere Institution geändert werden, wenn z.B. die Analyse des zu debuggenden Programms dies erfordert. Dazu muss das zu debuggende Programm in vorteilhafter Weise nicht neu gestartet werden. Die Zuordnungsmatrix kann also zum einen vor dem Programmstart definiert werden, aber auch später während des Debuggens des Programms erneut verändert werden.

Wie bereits ausgeführt, gehört zu der Erfindung auch ein Mehrkern-Prozessorsystem mit einer Debugging-Einrichtung. Diese Debugging-Einrichtung ist dazu ausgelegt, zum einen eine Exception-Handling-Routine zumindest eines Prozessorkerns des Mehrkern-Prozessorsystems festzulegen und zum anderen eine Zuordnungsmatrix für die Exception-Handling-Routine bereitzustellen. Des Weiteren ist die Debugging-Einrichtung dazu ausgelegt, das Mehrkern-Prozessorsystem gemäß einer Ausführungsform des erfindungsgemäßen Verfahrens zu betreiben.

Schließlich gehört zu der Erfindung auch ein Computerprogrammprodukt, mittels welchem ein herkömmliches Mehrkern-Prozessorsystem ebenfalls in der Weise betrieben werden kann wie ein Mehrkern-Prozessorsystem gemäß der Erfindung. Hierzu ist auf einem Speichermedium, beispielsweise einer CD-ROM oder einer Festplatte, ein Debugging-Programm bereitgestellt, welches dazu ausgelegt ist, bei Ausführung des DebuggingProgramms durch ein Mehrkern-Prozessorsystem eine Ausführungsform des erfindungsgemäßen Verfahrens durchzuführen. Wie bereits eingangs ausgeführt, kann insbesondere bei einem Enbedded-System das Debugging-Programm auch auf einem mit dem Mehrkern-Prozessorsystem gekoppelten Computersystem ausgeführt werden. Auch diese Ausführungsform des DebuggingProgramms ist von dem erfindungsgemäßen Programmprodukt umfasst.

Im Folgenden ist die Erfindung noch einmal anhand eines konkreten Ausführungsbeispiels erläutert. Die FIGUR zeigt hierzu ein Mehrkern-Prozessorsystem oder kurz System 10, das beispielsweise ein Entwicklungssystem für Embedded-Anwendungen sein kann. Das System 10 weist mehrere (hier beispielhaft drei) Prozessorkerne 12, 14, 16 (Core 1, Core 2, Core 3) auf, einen Speicher 18 und eine Debugging-Einrichtung 20 mit einem Backend 22 (BE) und einem Frontend 24 (FE). Die Prozessorkerne 12, 14, 16 sind über Interrupt-Leitungen I1, 12, 13 miteinander verbunden.

Die Debugging-Einrichtung 20 kann beispielsweise ein Programmmodul für das Backend 22 und ein Programmmodul für das Frontend 24 umfassen. Die Debugging-Einrichtung 20 kann beispielsweise durch einen weiteren (hier nicht dargestellten) Prozessorkern ausgeführt werden.

Durch die Prozessorkerne 12, 14, 16 wird ein Programm ausgeführt, das mittels der Debugging-Einrichtung 20 analysiert werden soll. Das Programm umfasst in dem Beispiel drei Threads (THRD) 26, 28, 30, von denen der Thread 26 (THRD n) von dem Prozessorkern 12, der Thread 28 (THRD m) durch den Prozessorkern 14 und der Thread 30 (THRD k) durch den Prozessorkern 16 ausgeführt wird. Eine (nicht dargestellte) Bedienperson gibt für die Analyse an dem Frontend 24 ein, dass die Ausführung des Threads 26 durch den Prozessorkern 12 an einer bestimmten Stelle im Programmtext des Threads 26 unterbrochen werden soll. Hierzu setzt die Bedienperson in an sich bekannter Weise einen Breakpoint 32, d.h. sie kennzeichnet eine Programmstruktur im Thread 26, an welcher die Ausführung des Threads 26 unterbrochen werden soll. Die Eingabe der Bedienperson wird von dem Frontend 24 an das Backend 22 weitergegeben, welches den Breakpoint 32 als eine Debug-Anweisung im Programmcode des Threads 26 einfügt.

Wenn der Breakpoint 32 beim Ausführen des Threads 26 durch den Prozessorkern 12 erreicht wird, soll aber nicht nur der Thread 26 angehalten werden, sondern auch die übrigen Threads 28, 30 des Programms sollen möglichst schnell, d.h. möglichst zum selben Zeitpunkt oder zumindest nur wenige Taktzyklen später angehalten werden.

Die Abschaltung der anderen Prozessorkerne 14, 16 des Mehrkern-Prozessorsystems 10 durch das Debugger-Frontend 24 oder auch durch eine Hardware-Probe, wie sie aus dem Stand der Technik bekannt ist, ist hierzu viel zu langsam, da speziell im Fall eines Echtzeitsystems die anderen Prozessorkerne 14, 16 zu viele Befehle verarbeiten, bis sie angehalten werden. Dies führt zu einer inkonsistenten und damit für die Bedienperson zum Analysieren des Programms unbrauchbaren Repräsentation der Programmdaten.

Bei dem System 10 ist daher eine Lösung über eine von außen, d.h. über die Debugging-Einrichtung 20, programmierbare Prozessorkern-Aktion-Matrix (Core/Action-Matrix) oder kurz Matrix 34 bereitgestellt. Die Matrix 34 ist Bestandteil einer Exception-Handling-Routine (EHR) oder kurz Debug-Routine 36. Die Matrix 34 ist eine Zuordnungsmatrix.

Die Debug-Routine 36 kann von der Debugging-Einrichtung 20, beispielsweise in dem Backend 22, im Speicher 18 abgespeichert worden sein. Für den Prozessorkern 12 ist z.B. in einem Register eine Sprungadresse 38 beispielsweise ebenfalls durch die Debugging-Einrichtung 20, insbesondere das Backend 22, festgesetzt worden, welche auf einen Startpunkt der Debug-Routine 36 im Speicher 18 weist. Sobald der Prozessorkern 12 den Breakpoint 32 bei der Ausführung des Threads 26 erreicht, unterbricht er die Ausführung des Threads 26 und führt den Programmcode aus, der an der Speicheradresse beginnt, auf welche die Sprungandresse 38 weist (in der Figur als Ereignis "Debug" symbolisiert). Mit anderen Worten führt der Prozessorkern 12 die Debug-Routine 36 aus. Durch die Debug-Routine 36 wird der Prozessorkern 12 dahingehend gesteuert, dass er über die Interrupt-Leitungen I1, I2 ein Inter-Prozessor-Interrupt-Signal (IPI) an die anderen Prozessorkerne 14, 16 sendet, wodurch diese ebenfalls das Abarbeiten der jeweiligen Threads 28, 30 unterbrechen. Welche Prozessorkerne durch das IPI-Signal unterbrochen werden sollen, wird durch die Debug-Routine 36 anhand der Matrix 34 ermittelt. Die in der FIGUR gezeigte Matrix zeigt hierbei nur exemplarisch die Wirkung der Matrix 34. Der Thread n (26) läuft auf Breakpoint 32 und löst somit die Debug-Exception aus. Die Debug-Routine 36 wertet die Matrix 34 aus und erhält daraus die Information, dass bei Auftreten eines Breakpoints 32 im Prozessorkern 12 (Core 1) die Prozessorkerne 14 und 16 (Core 2, Core 3) anzuhalten sind (siehe die erste Zeile 40 der Matrix 34). Entsprechend werden durch die Debug-Routine 36 bei ihrer Ausführung durch den Prozessorkern 12 die Prozessorkerne 14 und 16 bzw. die Threads m und k (28, 30) per IPI-Signal angehalten. In der Matrix 34 können entsprechende Aktionen für die Fälle eines Single-Step-Befehls (Zeile "Single Step") und eines Continue-Befehls (Zeile "Continue") definiert sein.

Der sich hierbei ergebende Nachlauf zwischen dem Erreichen des Breakpoints 32 und dem Anhalten der Prozessorkerne 14 und 16 ist nur wenige Taktzyklen lang, d.h. es werden nur wenige Befehle der Threads 28, 30 nach dem Erreichen des Breakpoints 32 ausgeführt, so dass der Zustand der Prozessorkerne 14 und 16 zum entscheidenden Zeitpunkt des Erreichens des Breakpoints 32 durch den Prozessorkern 12 sich nur geringfügig vom Zustand der Prozessorkerne 14, 16 bei deren Anhalten unterscheidet. Aus einer Analyse des Programmcodes der Threads 28, 30 können sogar die letzten Veränderungsschritte rückgängig gemacht werden, so dass der Zustand der angehaltenen Threads 28, 30 zum Zeitpunkt des Erreichens des Breakpoints 32 rekonstruiert werden kann.

Die Lösung über eine von außen programmierbare Matrix 34 bietet also sowohl durch ihre Flexibilität als auch durch die Realisierung in der Ausnahmebehandlung des Prozessors (Exception-Handling-Routine) die notwendige Geschwindigkeit, um die anderen betroffenen Prozessorkerne mit so wenig Verzögerung wie möglich anzuhalten. Weitere Vorteile ergeben sich aus der zulässigen Asymmetrie der Matrix, so dass das Anhalten eines Prozessorkerns zwar andere ebenfalls anhält, aber nicht unbedingt umgekehrt, falls einer der anderen Prozessorkerne anhält.

### Bezugszeichenliste

- 10: Mehrkern-Prozessorsystem
- 12, 14, 16: Prozessorkern
- 18: Speicher
- 20: Debugging-System
- 22: Backend
- 24: Frontend
- 26, 28, 30: Thread
- 32: Breakpoint
- 34: Zuordnungsmatrix
- 36: Exception-Handling-Routine
- 38: Sprungadresse
- 40: Matrixzeile
- Debug: Debug-Ereignis
- I1, I2, I3: Interrupt-Leitung
- IPI: Inter-Prozess-Interrupt-Signal

## Patentansprüche

1. Verfahren zum Betreiben eines Mehrkern-Prozessorsystems (10), wobei unterschiedliche Threads (26, 28, 30) eines Programms zeitgleich durch jeweils einen anderen Prozessorkern (12, 14, 16) des Mehrkern-Prozessorsystems (10) ausgeführt werden und bei dem Verfahren
- in einen ersten der Threads (26), der von einem ersten der Prozessorkerne (12) ausgeführt wird, ein Breakpoint (32) als Debug-Anweisung (32) eingefügt wird, wobei bei Ausführen der Debug-Anweisung (32) durch den ersten Prozessorkern (12) dieser das Ausführen des ersten Threads (26) unterbricht und stattdessen eine Exception-Handling-Routine (36) ausführt, wobei
- eine Zuordnungsmatrix (34) bereitgestellt wird, welche festlegt, welcher andere Prozessorkern (14, 16) zusätzlich unterbrochen werden soll, wenn der erste Prozessorkern (12) gemäß der Debug-Anweisung das Ausführen des ersten Threads (26) unterbricht, und
- durch die Exception-Handling-Routine (36) des ersten Prozessorkerns (12) anhand der Zuordnungsmatrix (34) zumindest ein zusätzlich zu unterbrechender Prozessorkern (14, 16) ermittelt und an den zumindest einen ermittelten Prozessorkern (14, 16) durch die Exception-Handling-Routine (36) ein Inter-Prozessor-Interrupt (IPI) zum Unterbrechen dieses Prozessorkerns (14, 16) gesendet wird
**dadurch gekennzeichnet, dass**
der tatsächliche Zustand der Prozessorkerne (14, 16) zum Zeitpunkt des Erreichens des Breakpoints (32) ermittelt wird, indem ein Nachlauf der Prozessorkerne (14, 16) zwischen dem Erreichen des Breakpoints (32) und dem Anhalten des Prozessorkerns (14, 16) durch Analyse des Programmcodes ermittelt wird und die letzten Veränderungsschritte rückgängig gemacht werden.

2. Verfahren nach Anspruch 1, wobei erst nach dem Unterbrechen des ersten und des zumindest einen ermittelten Prozessorkerns (12, 14, 16) ein die Unterbrechung signalisierendes Signal an ein Backend (22) und/oder ein Frontend (24) einer Debugging-Einrichtung (20) abgegeben wird.

3. Verfahren nach einem der vorhergehenden Ansprüche, wobei durch die Zuordnungsmatrix (34) für mehrere der Prozessorkerne (12, 14, 16) festgelegt wird, welche anderen Prozessorkerne (12, 14, 16) jeweils bei einer Unterbrechung wegen einer Debug-Anweisung (32) wie reagieren.

4. Verfahren nach Anspruch 3, wobei eine asymmetrische Zuordnungsmatrix (34) bereitgestellt wird.

5. Verfahren nach einem der vorhergehenden Ansprüche, wobei nach dem Unterbrechen des ersten Prozessorkerns (12) und des zumindest einen ermittelten Prozessorkerns eine Debugging-Einrichtung (20) ein Continue-Signal erzeugt und durch die Debugging-Einrichtung (20) oder durch einen der unterbrochenen Prozessorkerne (12, 14, 16) anhand der Zuordnungsmatrix (34) ermittelt wird, an welche der Prozessorkerne (12, 14, 16) das Continue-Signal weitergeleitet werden soll, und gemäß der Zuordnungsmatrix (34) das Continue-Signal an mehrere der unterbrochenen Prozessorkerne (12, 14, 16) geleitet wird.

6. Verfahren nach einem der vorhergehenden Ansprüche, wobei nach dem Unterbrechen des ersten Prozessorkerns (12) und des zumindest einen ermittelten Prozessorkerns eine Debugging-Einrichtung (20) einen Single-Step-Befehl erzeugt und durch die Debugging-Einrichtung (20) oder durch einen der unterbrochenen Prozessorkerne (12, 14, 16) anhand der Zuordnungsmatrix (34) ermittelt wird, an welche der Prozessorkerne (12, 14, 16) der Single-Step-Befehl weitergeleitet werden soll, und gemäß der Zuordnungsmatrix (34) der Single-Step-Befehl an mehrere der unterbrochenen Prozessorkerne (12, 14, 16) geleitet wird.

7. Verfahren nach einem der vorhergehenden Ansprüche, wobei vor dem Start des Programms durch eine Konfigurationseinrichtung (20)
a) ermittelt wird, welche Threads (26, 28, 30) in Bezug auf das Unterbrechen voneinander abhängig sind, und
b) festgelegt wird, welcher der Threads (26, 28, 30) durch welchen der Prozessorkerne (12, 14, 16) ausgeführt werden soll, und
c) entsprechend der ermittelten Abhängigkeit die Zuordnungsmatrix (34) erzeugt wird und die Threads (26, 28, 30) zu den Prozessorkernen zugeordnet werden.

8. Verfahren nach einem der vorhergehenden Ansprüche, wobei die Zuordnungsmatrix (34) nach dem Start des Programms verändert wird.

9. Mehrkern-Prozessorsystem (10) mit einer Debugging-Einrichtung (20), die dazu ausgelegt ist, eine Exception-Handling-Routine (36) zumindest eines Prozessorkerns (12) des Mehrkern-Prozessorsystems (10) und eine Zuordnungsmatrix (34) bereitzustellen und das Mehrkern-Prozessorsystem (10) gemäß einem Verfahren nach einem der vorhergehenden Ansprüche zu betreiben.

10. Computerprogrammprodukt mit einem auf zumindest einem Speichermedium gespeicherten Debuggingprogramm (20), welches dazu ausgelegt ist, bei Ausführen des Debuggingprogramms (20) durch ein Mehrkern-Prozessorsystem (10) oder einem mit diesem Mehrkern-Prozessorsystem (10) gekoppeltes Computersystem ein Verfahren nach einem der Ansprüche 1 bis 8 durchzuführen.

## Claims

1. Method for operating a multicore processor system (10), wherein different threads (26, 28, 30) of a program are executed at the same time by another respective processor core (12, 14, 16) of the multicore processor system (10) and in the method
- a breakpoint (32) is inserted as a debug instruction (32) into a first of the threads (26) which is executed by a first of the processor cores (12), wherein, during execution of the debug instruction (32) by the first processor core (12), the latter interrupts the execution of the first thread (26) and instead executes an exception handling routine (36),
wherein
- an assignment matrix (34) is provided, which assignment matrix stipulates which other processor core (14, 16) is intended to be additionally interrupted if the first processor core (12) interrupts the execution of the first thread (26) according to the debug instruction, and
- at least one processor core (14, 16) to be additionally interrupted is determined by the exception handling routine (36) of the first processor core (12) using the assignment matrix (34) and an inter-processor interrupt (IPI) for interrupting this processor core (14, 16) is transmitted to the at least one determined processor core (14, 16) by the exception handling routine (36),
**characterized in that**
the actual state of the processor cores (14, 16) at the time at which the breakpoint (32) is reached is determined by determining a slowing-down of the processor cores (14, 16) between the reaching of the breakpoint (32) and the stopping of the processor core (14, 16) by analysing the program code and reversing the last change steps.

2. Method according to Claim 1, wherein a signal which signals the interruption is emitted to a backend (22) and/or a frontend (24) of a debugging device (20) only after the first and the at least one determined processor core (12, 14, 16) have been interrupted.

3. Method according to one of the preceding claims, wherein the assignment matrix (34) stipulates for a plurality of the processor cores (12, 14, 16) which other processor core (12, 14, 16) respectively react in what manner in the event of an interruption owing to a debug instruction (32).

4. Method according to Claim 3, wherein an asymmetrical assignment matrix (34) is provided.

5. Method according to one of the preceding claims, wherein a debugging device (20) generates a continue signal after the first processor core (12) and the at least one determined processor core have been interrupted, and the debugging device (20) or one of the interrupted processor cores (12, 14, 16) uses the assignment matrix (34) to determine which of the processor cores (12, 14, 16) the continue signal is intended to be forwarded to, and the continue signal is passed to a plurality of the interrupted processor cores (12, 14, 16) according to the assignment matrix (34).

6. Method according to one of the preceding claims, wherein a debugging device (20) generates a single-step command after the first processor core (12) and the at least one determined processor core have been interrupted, and the debugging device (20) or one of the interrupted processor cores (12, 14, 16) uses the assignment matrix (34) to determine which of the processor cores (12, 14, 16) the single-step command is intended to be forwarded to, and the single-step command is passed to a plurality of the interrupted processor cores (12, 14, 16) according to the assignment matrix (34).

7. Method according to one of the preceding claims, wherein, before the start of the program, a configuration device (20)
a) determines which threads (26, 28, 30) are dependent on one another with respect to the interruption, and
b) stipulates which of the threads (26, 28, 30) is intended to be executed by which of the processor cores (12, 14, 16), and
c) the assignment matrix (34) is generated according to the dependence determined and the threads (26, 28, 30) are assigned to the processor cores.

8. Method according to one of the preceding claims, wherein the assignment matrix (34) is changed after the start of the program.

9. Multicore processor system (10) having a debugging device (20) which is designed to provide an exception handling routine (36) of at least one processor core (12) of the multicore processor system (10) and an assignment matrix (34) and to operate the multicore processor system (10) according to a method according to one of the preceding claims.

10. Computer program product having a debugging program (20) stored on at least one storage medium, which is designed to carry out a method according to one of Claims 1 to 8 during execution of the debugging program (20) by a multicore processor system (10) or a computer system coupled to this multicore processor system (10).

## Revendications

1. Procédé d'exploitation d'un système de processeur multi-coeur (10), différentes filières (26, 28, 30) d'un programme étant exécutées simultanément par respectivement un autre coeur de processeur (12, 13, 16) du système de processeur multi-coeur (10) et dans lequel :
- dans une première des filières (26) exécutée par un premier des coeurs de processeur (12) étant inséré un point d'arrêt (32) en tant qu'instruction de débogage (32), lors de l'exécution de l'instruction de débogage (32) par le premier coeur de processeur (12), celui-ci interrompant l'exécution de la première filière (26) et exécutant, au lieu de cela, une routine de gestion d'exception (36),
- une matrice d'association (34) étant fournie, laquelle détermine quel autre coeur de processeur (14, 16) doit être additionnellement interrompu lorsque le premier coeur de processeur (12) interrompt l'exécution de la première filière (26) conformément à l'instruction de débogage et
- la routine de gestion d'exception (36) du premier coeur de processeur (12) détermine, à l'aide de la matrice d'association (34), au moins un coeur de processeur (14, 16) à interrompre additionnellement et la routine de gestion d'exception (36) envoie à l'au moins un coeur de processeur déterminé (14, 16) un inter-processor interrupt (IPI) pour l'interruption de ce coeur de processeur (14, 16),
- **caractérisé en ce que** l'état réel des coeurs de processeur (14, 16) à l'instant de l'obtention du point d'arrêt (32) est déterminé par détermination d'un retard des coeurs de processeur (14, 16) entre l'obtention du point d'arrêt (32) et l'arrêt du coeur de processeur (14, 16) par analyse du code de programme et annulation des dernières étapes de modification.

2. Procédé selon la revendication 1, un signal signalant l'interruption n'état envoyé à un backend (22) et/ou un frontend (24) d'un dispositif de débogage (20) qu'après l'interruption du premier et de l'au moins un coeur de processeur déterminé (12, 14, 16).

3. Procédé selon l'une des revendications précédentes, la matrice d'association (34) déterminant, pour plusieurs des coeurs de processeur (12, 14, 16), quelles autres coeurs de processeur (12, 14, 16) réagissent respectivement comment lors d'une interruption en raison d'une instruction de débogage (32).

4. Procédé selon la revendication 3, une matrice d'association asymétrique (34) étant fournie.

5. Procédé selon l'une des revendications précédentes, un dispositif de débogage (20) générant un signal de continuation après l'interruption du premier coeur de processeur (12) et de l'au moins un coeur de processeur déterminé et le dispositif de débogage (20) ou l'un des coeurs de processeur interrompus (12, 14, 16) déterminant, à l'aide de la matrice d'association (34), auquel des coeurs de processeur (12, 14, 16) le signal de continuation doit être retransmis, et le signal de continuation étant transmis à plusieurs des coeurs de processeur interrompus (12, 14, 16) conformément à la matrice d'association (34).

6. Procédé selon l'une des revendications précédentes, un dispositif de débogage (20) générant une commande Single Step après l'interruption du premier coeur de processeur (12) et de l'au moins un coeur de processeur déterminé et le dispositif de débogage (20) ou l'un des coeurs de processeur interrompus (12, 14, 16) déterminant, à l'aide de la matrice d'association (34), auquel des coeurs de processeur (12, 14, 16) la commande Single Step doit être retransmise, et la commande Single Step étant transmise à plusieurs des coeurs de processeur interrompus (12, 14, 16) conformément à la matrice d'association (34).

7. Procédé selon l'une des revendications précédentes, un dispositif de configuration (20), avant le lancement du programme,
a) déterminant quelles filières (26, 28, 30) dépendent l'une de l'autre par rapport à l'interruption et
b) déterminant laquelle des filières (26, 28, 30) doit être exécutée par lequel des coeurs de processeur (12, 14, 16) et
c) générant la matrice d'association (34) conformément à la dépendance déterminée et associant les filières (26, 28, 30) aux coeurs de processeur.

8. Procédé selon l'une des revendications précédentes, la matrice d'association (34) étant modifiée après le lancement du programme.

9. Système de processeur multi-coeur (10) avec un dispositif de débogage (20) qui est conçu pour fournir une routine de gestion d'exception (36) d'au moins un coeur de processeur (12) du système de processeur multi-coeur (10) et une matrice d'association (34) et exploiter le système de processeur multi-coeur (10) conformément à un procédé selon l'une des revendications précédentes.

10. Produit de programme informatique comportant un programme de débogage (20) stocké sur au moins un support de mémoire, conçu pour exécuter un procédé selon l'une des revendications 1 à 8 lors de l'exécution du programme de débogage (20) par un système de processeur multi-coeur (10) ou un système informatique couplé à ce système de processeur multi-coeur (10).
